# NEUE EUROPÄISCHE PATENTSCHRIFT

(11) **EP 0 925 905 B2**
(45) Veröffentlichungstag und Bekanntmachung des Hinweises auf die Entscheidung über den Einspruch: **26.07.2006**
(45) Hinweis auf die Patenterteilung: 01.08.2001
(21) Anmeldenummer: 98890360.5
(22) Anmeldetag: 03.12.1998
(51) Int. Cl.: B29C 47/90

(54) **Vorrichtung zum Abkühlen und Kalibrieren von extrudierten Kunststoffprofilen**
Apparatus for cooling and calibrating extruded plastic profiles
Dispositif de refroidissement et de calibrage de profilés en matière plastique extrudés

(30) Priorität: 22.12.1997 AT 217197
(43) Veröffentlichungstag der Anmeldung: 30.06.1999
(73) Patentinhaber: Technoplast Kunststofftechnik Gesellschaft m.b.H., 4563 Micheldorf (AT)
(72) Erfinder: Wegmaier, Rudolf, 4563 Micheldorf (AT); Gugenberger, Walter, 4623 Gunskirchen (AT); Dorninger, Frank, 4563 Micheldorf (AT)
(74) Vertreter: Babeluk, Michael

(56) Entgegenhaltungen:
- EP-A- 0 659 537
- WO-A-97/29899
- DE-U- 29 716 343
- GB-A- 2 313 570

## Beschreibung

Die vorliegende Erfindung betrifft eine Vorrichtung zum Abkühlen und Kalibrieren von extrudierten Kunststoffprofilen gemäß dem Oberbegriff vor Patentanspruch 1.
Eine Anlage zur Herstellung von Kunststoffprofilen, wie sie für die Produktion von Fenstern oder Türen benötigt werden, besitzt derzeit üblicherweise den folgenden Aufbau: ein Extruder erzeugt einen Profilstrang teigiger Konsistenz aus einem Kunststoffgranulat. Ein oder mehrere Trockenkalibriereinrichtungen kühlen das Profil in einem gewissen Ausmaß ab, so dass eine einigermaßen stabile Form erreicht wird. Eine Trockenkalibrierung besteht im wesentlichen aus einem Stahlblock mit einer Öffnung, durch die das Profil hindurchgeführtwird, und mit einer Mehrzahl von Vakuumschlitzen, um das Profil unter Druck an die Wände der Öffnung anzusaugen. Auf diese Weise wird das Zusammenfallen des noch weichen Profils verhindert. Weiters sind mehrere Kühlkanäle vorgesehen. Eine oder mehrere Nasskalibriervorrichtungen bewirken die endgültige Abkühlung und Formung des Profils. In den letzten Jahren haben sich Nasskalibrierungsvorrichtungen nach dem sogenannten Wirbelbadprinzip als besonders günstig herausgestellt. Bei solchen Vorrichtungen wird die Wanne durch Kalibrierblenden in mehrere Kammern unterteilt, und es wird durch Öffnungen in den Blenden eine turbulente Strömung des Kühlmediums in der Wanne hervorgerufen. Ein in der Wanne vorliegender Unterdruck drückt dabei das Profil an die Kalibrierblenden. Auf diese Weise wird eine genaue Kalibrierung und eine schnelle Abkühlung des Profils bei geringem Wasserverbrauch ermöglicht. Ein Raupenabzug zieht das Profil durch die vorgelagerten Kalibriereinrichtungen.
Der technische Fortschritt bei Extrudern und den Rezepturen für die Profilextrusion hat zu ständig ansteigenden Forderungen an die Arbeitsgeschwindigkeit von Extrusionslinien geführt. Um diesen Forderungen gerecht zu werden, ist es derzeit üblich, mehrere Trockenkalibrierungen hintereinander anzuordnen und stromabwärts davon ein oder mehrere Wasserbäder vorzusehen. Trockenkalibrierungen sind jedoch sehr aufwendig, so dass aus Kostengründen eine Verringerung Ihrer Anzahl wünschenswert erscheint.
Für langsam arbeitende Extrusionslinien sind Kalibriersysteme darstellbar, die nur mit einer einzelnen Trokkenkalibrierung in üblicher Länge von etwa 300 mm auskommen. Wenn jedoch bei einem solchen System die Arbeitsgeschwindigkeit über einen relativ bescheidenen Wert hinaus gesteigert wird, kann kein hochwertiges Profil mehr hergestellt werden.
Aus der DE 27 40 989 A ist eine Kalibriervorrichtung für Kunststoffprofile bekannt, bei der ein Profil in einem Wasserbad unter Vakuum kalibriert und abgekühlt wird. Dabei ist an der eintrittsseitigen Stirnwand der Kalibrierwanne ein Rohrstück angebracht, um das Profil nach dem Eintritt über eine gewisse Wegstrecke zu führen und zu kalibrieren. Im Inneren dieses Rohres liegen jedoch unklare Druckverhältnisse vor, so dass ein enges Anliegen des Profils an dem Rohr nicht gewährleistet ist. Weiters ist aus der DE 27 34 831 A eine Extrusionsvorrichtung für Rohre bekannt, bei der an eine Trockenkalibriervorrichtung direkt ein Wasserbad anschließt, das ähnlich wie in der oben beschriebenen Druckschrift ausgebildet ist. Auch hier liegen im wesentlichen die gleichen Nachteile vor.
Die DE 297 16 34 U1 zeigt eine Extrusionsanlage mit mehreren Trockenkalibriereinrichtungen, die durch Dichtungen untereinander verbunden sind. Über eine besondere Ausbildung der daran anschließenden Nasskalibriereinrichtungen ist nichts ausgesagt.
Aufgabe der vorliegenden Erfindung ist es, diese Nachteile zu vermeiden und einerseits hohe Produktionsgeschwindigkeiten zu erzielen, wobei andererseits der notwendige Aufwand reduziert werden soll. Insbesondere soll es die vorliegende Erfindung ermöglichen, nur mit einer einzelnen Trockenkalibrierung üblicher Länge das Auslangen zu finden.
Erfindungsgemäß werden diese Aufgaben durch die Maßnahmen von Patentanspruch 1 gelöst.
Es wurde herausgefunden, dass eine Hauptursache der unzureichenden Profilqualität bei Verringerung der Anzahl von Trockenkalibriervorrichtungen darin besteht, dass die Profile in noch sehr warmern und daher weichem Zustand in das Wasserbad eintreten. Durch den Unterdruck, der systembedingt in einer solchen Nasskalibrierung herrscht, wird das Profil in den Bereichen zwischen den Kalibrierblenden auseinandergezogen, wodurch Innenstege des Profils unkontrolliert gedehnt werden. Durch die Kalibrierblenden wird die Außenkontur des Profils zwar letztlich in die gewünschte Form gebracht, die Innenstege des Profils können jedoch nicht mehr saniert werden. Solche Profile sind in der Praxis nicht verwendbar.

Bei der vorliegenden Erfindung wird das Profil in einem ersten Abschnitt des Wasserbades durch die Hülse vor dem Angriff des Vakuums geschützt. Da die Kräfte zufolge des Vakuums proportional zu der Fläche sind, auf der sie wirken, ist eine Führung des Profils hauptsächlich im Bereich des Hauptkörpers notwendig. Insbesondere ist es günstig, wenn die Länge der Hülse zwischen 100 und 400 mm, vorzugsweise zwischen 250 und 320 mm beträgt. Besonders dann, wenn die Hülse dünnwandig ausgeführt ist, wird durch das im Außenbereich der Hülse strömende Kühlmedium eine weitere schnelle Abkühlung des Profils erreicht, so dass stromabwärts der Hülse die Form bereits so weit stabilisiert hat, dass keine Gefahr einer Überdehnung der Innenstege des Profils gegeben ist.
In einer besonders begünstigten Ausführungsvariante der Erfindung ist eine Führung insbesondere in den Bereichen der Verbindung von Innenstegen mit der Außenkontur des Profils vorgesehen. Auf diese Weise werden die besonders kritischen Teile des Profils zuverlässig geschützt.
Vorzugsweise ist die Hülse in einem stromaufwärtigen Bereich der Wanne angeordnet. Es können dabei auch mehrere Hülsen hintereinander vorgesehen sein. Auf diese Weise kann mit einfachen Mitteln eine besonders zuverlässige Abkühlung ohne Gefährdung der Form des Profils erreicht werden.
Die erfindungsgemäßen Losung zieht vor, dass die Hülse von mehreren Blenden gehalten wird und wenn die Blenden die Wanne in Axialrichtung des Profils in Kammern unterteilen, Wobei im Bereich der Hülsen Öffnungen zum Hindurchströmen des Kühlmediums vorgesehen sind. Insbesondere kann dabei vorgesehen sein, dass an einem Ende der Wanne eine Zufuhröffnung für ein Kühlmedium und an dem anderen Ende der Wanne eine Abfuhröffnung für ein Kühlmedium vorgesehen ist, so dass die Wanne im wesentlichen in Längsrichtung von einem Kühlmedium durchströmt ist. Durch diese Lösung kann bei geringem Wasserverbrauch eine hervorragende Kühlwirkung erreicht werden.
Ein besonders einfacher Aufbau der erfindungsgemäßen Vorrichtung ergibt sich dadurch, dass vorzugsweise die Hülse und/oder die Kalibrierblenden in einer Richtung quer zur Axialrichtung des Profils beschränkt beweglich gelagert sind. Eine aufwendige Justierung der Hülse und der Kalibrierblenden quer zur Axialrichtung des Profils kann auf diese Weise entfallen. Spannungen und eine Klemmwirkung zufolge einer unzureichenden Justierung können dadurch sicher vermieden werden. Weiters betrifft die vorliegende Erfindung ein System zum Abkühlen und Kalibrieren von extrudierten Kunststoffprofilen mit einer Trockenkalibrierung, in der das extrudierte Profil durch Anlegen von Vakuum abgekühlt und kalibriert wird.

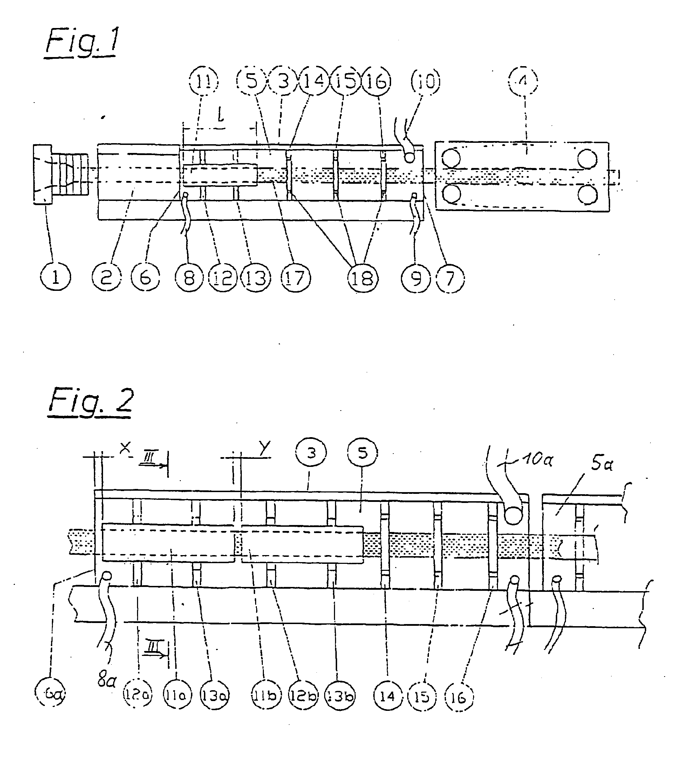

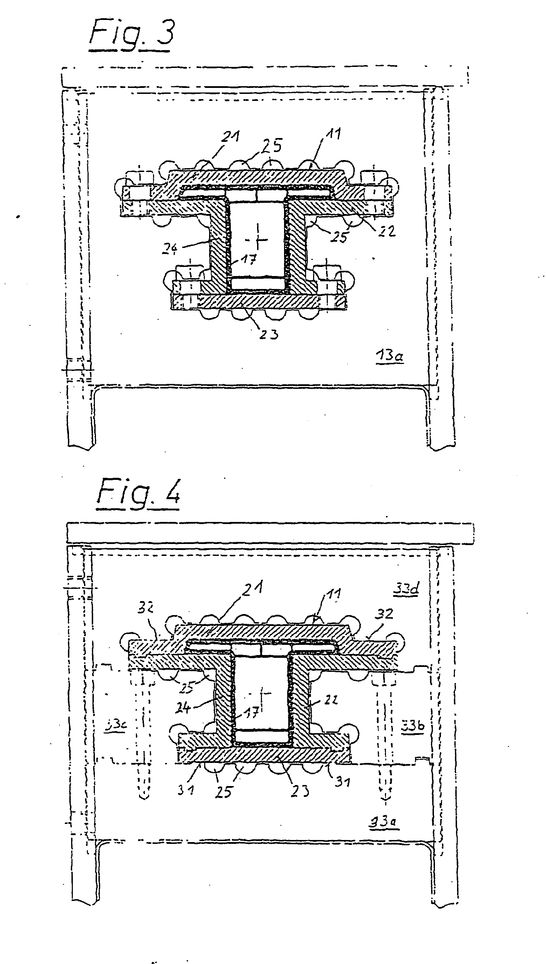

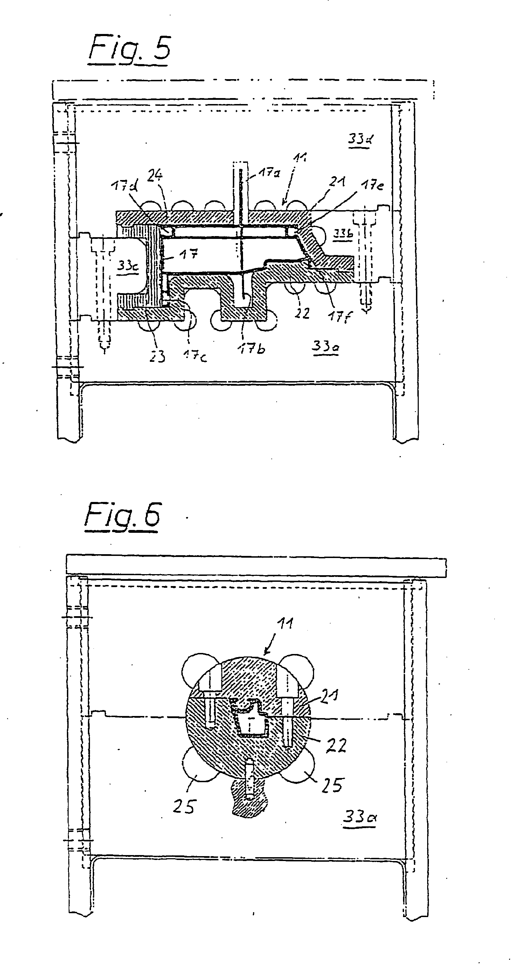

Dabei werden gegebenenfalls eine oder mehrere Wannen eingesetzt, in denen in einem Wasserbad Kalibrierblenden angeordnet sind. Eine besonders genaue Einstellbarkeit und Abstimmbarkeit der Kalibrierung wird dadurch ermöglicht, dass der mit mindestens einer Hülse ausgestatteten Wanne eine weitere Wanne mit Kalibrierblenden nachgeschaltet ist, in der ein geringerer Unterdruck herrscht, als in der ersten Wanne.
Weiters hat es sich herausgestellt, dass das Vakuum in der Trockenkalibriereinrichtung in besonders günstiger Weise dadurch aufrecht erhalten werden kann, dass die Wanne direkt an die stromabwärtige Stimfläche der Trockenkalibriereinrichtung angeflanscht ist, so dass diese direkt mit dem Kühlmedium in Berührung ist. Durch diese Ausführungsvariante wird einerseits der Leistungsbedarf der Vakuumpumpe für die Trockenkalibrierung gering gehalten und andererseits eine Stabilität des erzielten Vakuums erreicht, die sich positiv auf die Profilqualität auswirkt.
Durch das erfindungsgemäße System können bestehende Produktionslinien mit nur einer Trockenkalibriereinheit mit wesentlich größeren Produktionsgeschwindigkeiten gefahren werden.
Bei Hochleistungssystemen ist die Erreichung höchster Extrusionsgeschwindigkeiten möglich.
In der Folge wird die Erfindung anhand der in den Figuren dargestellten Ausführungsbeispiele näher erläutert. Es zeigen:
Fig. 1 schematisch eine Extrusionslinie mit einer erfindungsgemäßen Vorrichtung,
Fig. 2 eine erfindungsgemäße Vorrichtung in vergrößertem Maßstab in einer seitlichen Ansicht,
Fig. 3 einen Schnitt nach Unie III-III in Fig. 2 in einem vergrößerten Maßstab und
Fig. 4 bis 6 abgeänderte Ausführungsvarianten in Schnitten entsprechend den von Fig. 3.
Bei der Figurenbeschreibung sind Bauteile mit grundsätzlich gleicher Funktion in den einzelnen Ausführungsvarianten mit den gleichen Bezugszeichen bezeichnet, auch wenn ihre Form unterschiedlich ist.
Die Extrusionslinie der Fig. 1 besteht aus folgenden Bauelementen, die hintereinander angeordnet sind: einem Extruder 1, einer Trockenkalibriereinrichtung 2, einer Nasskalibriereinrichtung 3 und einem Raupenabzug 4. Die Nasskalibriereinrichtung 3 besteht aus einer Wanne 5, die direkt an die Stirnwand 6 der Trockenkalibrierung 2 angeflanscht ist und die zum Raupenabzug 4 hin durch eine stromabwärtige Stirnwand 7 abgeschlossen ist. Im stromaufwärtigen Bereich wird über einen Kühlwasseranschluss 8 Kühlwasser zugeführt, während am anderen Ende der Wanne 5 über einen weiteren Kühlwasseranschluss 9 das Kühlwasser aus der Wanne 5 herausgeführt wird. Über einen Vakuumanschluss 10 wird ein Unterdruck im Inneren der Wanne 5 erzeugt. Im stromaufwärtigen Bereich der Wanne 5 ist eine Hülse 11 angeordnet, die von zwei Halterungen 12, 13 gehalten wird. Die Hülse 11 schließt mit einem geringen Abstand an die Stirnwand 6 an. Die Länge I der Hülse 11 beträgt ebenso wie die der Trockenkalibrierung 2 300 mm. Stromabwärts der Hülse 11 sind Kalibrierblenden 14, 15, 16 vorgesehen, die das Profil 17 in an sich bekannter Weise kalibrieren. Öffnungen 18 in den Blenden 14, 15, 16 dienen zur Erzeugung einerturbulenten Strömung des Kühlwassers, wie dies im europäischen Patent Nr. 0 659 536 beschrieben ist.
In der Fig. 2 ist eine geringfügig abgeänderte Ausführungsvariante der vorliegenden Erfindung in vergrößertem Maßstab dargestellt. Bei der Ausführung in der Fig. 2 ist die Wanne 5 am stromaufwärtigen Ende durch eine eigene Stirnwand 6a abgeschlossen. In der Wanne 5 sind zwei Hülsen 11a, 11b hintereinander angeordnet. Die Hülsen 11a, 11b werden von Blenden 12a, 13a bzw. 12b, 13b gehalten. Die Abstände x zwischen der Stirnwand 6 und der ersten Hülse 11a bzw. y zwischen der ersten Hülse 11a und der zweiten Hülse 11b sind mit wenigen Millimetern ausreichend klein, um eine Verformung des Profils zufolge des Unterdrucks in der Wanne 5 zu verhindern.
An die erfindungsgemäße Wanne 5 schließt am stromabwärtigen Ende eine weitere Wanne 5a an, die in herkömmlicher Weise als Wasserbad ausgebildet ist, wie es im europäischen Patent Nr. 0 659 536 beschrieben ist. Diese weitere Wanne 5a wird jedoch nicht einem so starken Unterdruck ausgesetzt wie die erste Wanne 5. In Abhängigkeit von den Eigenschaften des Profils und den sonstigen Randbedingungen der Kalibrierung wird die erste Wanne 5 etwa auf einem Absolutdruck von 0,4 bis 0,7 bar gehalten, während in der zweiten Wanne 5a ein Druck zwischen 0,6 und 0,8 bar eingestellt wird. Dabei ist der absolute Druck in der zweiten Wanne 5a etwa 0,1 bis 0,2 bar größer als in der ersten Wanne 5.
Die Ausführungsvariante von Fig. 2 unterscheidet sich von der Ausführungsvariante von Fig. 1 auch dadurch, dass das Kühlwasser über eine erste Zufuhröffnung 8a angesaugt wird. Dabei ist im Bereich dieser ersten Zufuhröffnung 8a keine Pumpe vorgesehen, und es wird ausschließlich der Unterdruck in der Wanne 5 verwendet, um den Zufluss zu bewirken. Über eine nicht dargestellte Regelungsvorrichtung kann der Kühlwasserstrom eingestellt werden. An derstromabwärtigen Seite am Ende der Wanne ist ein zweiter Anschluss 10a vorgesehen, der mit einer nicht dargestellten selbstansaugenden Wasserpumpe verbunden ist. Über diesen Anschluss 10a wird einerseits das erforderliche Vakuum in der Wanne 5 hergestellt und andererseits das Kühlmedium abgezogen. Durch diese Konstruktion kann mit relativ einfachen Mitteln ein starker Unterdruck in der Wanne 5 erzeugt werden. Insgesamt ist es durch die vorliegende Erfindung möglich, durch stärkere Evakuierung der Wanne 5 eine verbesserte Profilqualität zu erzielen, da das Profil 17 stärker an die Hülsen 11a, 11b und an die Kalibrierblenden 14, 15, 16 angedrückt wird. Bei der Ausführungsvariante von Fig. 3 ist das Profil 17 vollständig von einer Hülse 11 umgeben. Die Hülse 11 besteht aus den einzelnen Bauteilen 21, 22, 23 und 24, die miteinander verschraubt sind. Die Hülse 11 der Fig. 3 ist schwimmend in Blenden gehalten, von denen in der Fig. 3 die Blende 13a sichtbar ist. Durch diese Ausführung wird erreicht, dass die genaue Lage der Hülse 11 durch das Profil 17 bestimmt wird, so dass eine genau fluchtende Anordnung aller Blenden bei der Herstellung der erfindungsgemäßen Vorrichtung nicht erforderlich ist. Durch die geringfügige Beweglichkeit der Hülse 11 in der Blende 13a können etwaige Ungenauigkeiten ausgeglichen werden, ohne dass die Gefahr einer unnötigen Verformung des Profils 17 oder eines Klemmens besteht. Zwischen der Hülse 11 und der Blende 13a ist eine Vielzahl von Ausnehmungen 25 vorgesehen, die eine turbulente Strömung des Kühlwassers direkt an der Außenseite der Hülse 11 bewirken. Auf diese Weise wird eine besonders intensive Kühlung der Hülse 11 erreicht.
Die Ausführungsvariante der Fig. 4 entspricht im wesentlichen der von Fig. 3 mit dem Unterschied, dass die Blende aus vier Einzelteilen 33a, 33b, 33c und 33d zusammengesetzt ist, um einen Einbau der Hülse 11 von oben her zu ermöglichen. Die Hülse 11 mit ihren Einzelteilen 21, 22, 23 und 24 ist bei dieser Ausführungsvariante nicht verschraubt, sondem wird durch die Blende 33a bis 33d zusammengehalten. Bei dieser Ausführungsvariante ist in vertikaler Richtung eine schwimmende Lagerung naturgemäß nicht möglich. Vorsprünge 31 im Blendenteil 33a und 32 im Blendenteil 33d halten die Hülse 11 in einer vertikal genau definierten Stellung und drücken die Einzelteile 21 bis 24 der Hülse 11 zusammen.
Auch bei der Ausführungsvariante von Fig. 5 werden die Einzelteile 21 bis 24 der Hülse 11 durch die Blendenabschnitte 33a, 33b, 33c und 33d zusammengehalten. Unterschiedlich ist bei dieser Ausführungsvariante, dass die Hülse 11 das Profil 17 nicht vollständig umschließt. Ein erster Profilvorsprung 17a ragt frei aus der Hülse 11 nach oben vor. Ein zweiter Profilvorsprung 17b ist mit Abstand von der Hülse 11 umschlossen. Dichtungsnuten 17c, 17d und 17e sind im inneren Bereich freigestelft, und auch in einem Eckbereich 17f des Profils 17 besteht eine Freistellung, das heißt, ein Spalt zwischen der Hülse 11 und dem Profil 17. Auf diese Weise kann die Reibung zwischen dem Profil 17 und der Hülse 11 verringert werden, ohne die Wirksamkeit der vorliegenden Erfindung zu beeinträchtigen. Wesentlich ist, dass die großflächigen Wandbereiche des Profils 17 durch die Hülse 11 sicher abgestützt werden.
Die Fig. 6 zeigt eine besonders einfache Ausführungsvariante der Erfindung, die für kleine Profilquerschnitte geeignet ist. Dabei wird die innenkontur der Hülse 11, die aus zwei Bauteilen 21 und 22 zusammengesetzt ist, in einen zylindrischen Rohling erodiert. Die Ausführungsvariante der Fig. 6 ist so gestaltet, dass die Hülse 11 fest mit dem unteren Blendenabschnitt 33a verbunden ist, wobei auch die beiden Teile 11a und 11b der Hülse 11 fest miteinander verschraubt sind. Es ist für den Fachmann jedoch offensichtlich, dass auch diese zylindrische Hülse 11 schwimmend gelagert werden kann.
Die vorliegende Erfindung ermöglicht bei extrem kostengünstigem Aufbau einer Extrusionslinie höchste Produktionsgeschwindigkeit. Bereits bestehende Werkzeuge können in einfacher Weise aufgerüstet werden, um eine wesentlich erhöhte Produktionsleistung zu erreichen. Da in den Hülsen quer zur Produktionsrichtung keine Schlitze oder Öffnungen vorgesehen sind, wird eine hohe Oberflächenqualität erreicht.
Weiters wird durch einen Wasserfilm zwischen Profil und Hülse eine äußerst geringe Reibung erzielt, was einen geringen Schrumpf gewährleistet. Insgesamt ist es durch die vorliegende Erfindung möglich, die Funktion einer Trockenkalibrierung mit der Einfachheit eines Wirbelbades zu verbinden und mit einfachen Mitteln höchste Produktionsleistungen bei guter Qualität zu erreichen.

## Patentansprüche

1. Vorrichtung zum Abkühlen und Kalibrieren von extrudierten Kunststoffprofilen mit einer Wanne (5), die einer Trockenkalibriereinrichtung (2) nachgeschaltet ist und die ein Wasserbad enthält, durch das das Profil (17) geführt wird, wobei in der Wanne zwischen Stirnwänden (6, 6a; 7) Blenden (14, 15, 16) angeordnet sind, die die Wanne (5) in Axialrichtung des Profils (17) in Kammern unterteilen, um das Profil (17) unter Einwirkung von Unterdruck zu kalibrieren, **dadurch gekennzeichnet, dass** in einem Abschnitt der Wanne (5) eine das Profil (17) umgebende Hülse (11; 11a, 11b) vorgesehen ist, die zumindest einen Bereich des Hauptkörpers des Profils (17) führt, und die von mehreren Blenden (12, 13; 12a, 12b, 13a, 13b) gehalten wird, die im Bereich der Hülse (11; 11a, 11b) Öffnungen zum Hindurchströmen des Kühlmediums aufweisen, und dass ein Spalt zwischen dem Profil (17) und der Hülse (11; 11a, 11b) beidseitig mit dem Wasserbad in Verbindung steht.

2. Vorrichtung nach Anspruch 1, **dadurch gekennzeichnet, dass** die Hülse (11; 11a, 11b) in Längsrichtung einen Abstand zu den Stirnwänden (6, 6a; 7) aufweist.

3. Vorrichtung nach Anspruch 1 oder 2, **dadurch gekennzeichnet, dass** die Länge (1) der Hülse (11, 11a, 11b) zwischen 100 mm und 400 mm, vorzugsweise zwischen 250 mm und 320 mm beträgt und dass vorzugsweise die Hülse mit einer Wandstärke zwischen 5 mm und 10 mm ausgeführt ist.

4. Vorrichtung nach einem der Ansprüche 1 bis 3, **dadurch gekennzeichnet, dass** eine Führung, insbesondere in den Bereichen der Verbindung von Innenstegen mit der Außenkontur des Profils (17), vorgesehen ist.

5. Vorrichtung nach einem der Ansprüche 1 bis 4, **dadurch gekennzeichnet, dass** die Hülse (11; 11a, 11b) in einem stromaufwärtigen Bereich der Wanne (5) angeordnet ist.

6. Vorrichtung nach einem der Ansprüche 1 bis 5, **dadurch gekennzeichnet, dass** mehrere Hülsen (11a, 11b) nacheinander in der Wanne (5) vorgesehen sind.

7. Vorrichtung nach einem der Ansprüche 1 bis 6, **dadurch gekennzeichnet, dass** an einem Ende der Wanne (5) eine Zufuhröffnung (8) für ein Kühlmedium und an dem anderen Ende der Wanne (5) eine Abfuhröffnung (9) für ein Kühlmedium vorgesehen ist, so dass die Wanne (5) im Wesentlichen in Längsrichtung von einem Kühlmedium durchströmt ist.

8. Vorrichtung nach einem der Ansprüche 1 bis 7, **dadurch gekennzeichnet, dass** die Hülse (11; 11a, 11b) und/oder die Kalibrierblenden (14, 15, 16) in einer Richtung quer zur Axialrichtung des Profils (17) beschränkt beweglich gelagert sind.

9. Vorrichtung nach einem der Ansprüche 1 bis 8, **dadurch gekennzeichnet, dass** das Profil (17) von der Hülse (11; 11a, 11b) vollständig umschlossen ist.

10. Vorrichtung nach einem der Ansprüche 1 bis 9, **dadurch gekennzeichnet, dass** in der Wanne (5) ein erster Anschluss (8a) zum Ansaugen von Kühlwasser und ein zweiter Anschluss (10a) zum Absaugen von Luft und Kühlwasser vorgesehen sind, wobei an dem zweiten Anschluss (10a) eine selbstansaugende Wasserpumpe angeschlossen ist, die neben der Zirkulation des Kühlwassers auch das erforderliche Vakuum in der Wanne erzeugt.

11. Vorrichtung nach einem der Ansprüche 1 bis 10, **dadurch gekennzeichnet, dass** mehrere Trockenkalibriereinrichtungen (2) stromaufwärts der Wanne (5) vorgesehen sind.

12. Vorrichtung nach einem der Ansprüche 1 bis 11, **dadurch gekennzeichnet, dass** der mit mindestens einer Hülse (11; 11a, 11b) ausgestatteten Wanne (5) eine weitere Wanne mit Kalibrierblenden nachgeschaltet ist, in der ein geringerer Unterdruck herrscht, als in der ersten Wanne (5).

13. Vorrichtung nach einem der Ansprüche 1 bis 12, **dadurch gekennzeichnet, dass** die Wanne (5) direkt an die stromabwärtige Stirnfläche der Trockenkalibriereinrichtung (2) angeflanscht ist, so dass diese direkt mit dem Kühlmedium in Berührung ist.

## Claims

1. An apparatus for cooling and calibrating extruded plastic profiles with a trough (5) which is provided downstream of a dry calibrating device (2) and comprises a water bath through which the profile (17) is guided, with plates (14, 15, 16) being arranged in the trough between the face walls (6, 6a; 7), which plates subdivide trough (5) in the axial direction of the profile (17) in order to calibrate the profile (17) under the influence of negative pressure, **characterized in that** a sleeve (11; 11a, 11b) encompassing the profile (17) is provided in a section of the trough (5), which sleeve guides at least a zone of the main body of the profile (17) and which is held by several plates (12, 13; 12a, 12b, 13a, 13b) which in the region of the sleeve (11; 11a, 11b) comprise openings for allowing the cooling medium to flow through, and that a gap between the profile (17) and the sleeve (11; 11a, 11b) is in connection with the water bath on both sides.

2. An apparatus according to claim 1, **characterized in that** the sleeve (11; 11a, 11b) is provided in the longitudinal direction with a distance to the side walls (6, 6a; 7).

3. An apparatus according to claim 1 or 2, **characterized in that** the length (1) of the sleeves (11, 11a, 11b) is between 100 and 400 mm, preferably between 250 and 320 mm, and that preferably the sleeve is provided with a wall thickness of between 5 and 10 mm.

4. An apparatus according to one of the claims 1 to 3, **characterized in that** a guide means is provided, especially in the zones of the connection of inner bridges with the outer contour of the profile (17).

5. An apparatus according to one of the claims 1 to 4, **characterized in that** the sleeve (11; 11a, 11b) is arranged in an upstream zone of the trough (5).

6. An apparatus according to one of the claims 1 to 5, **characterized in that** several sleeves (11a, 11b) are arranged successively behind one another in the trough (5).

7. An apparatus according to one of the claims 1 to 6, **characterized in that** an inlet opening (8) for a cooling medium is provided at the one end of the trough (5) and a discharge opening (9) for a cooling medium is provided at the other end of the trough (5), so that the trough (5) is substantially flowed through in the longitudinal direction by a cooling medium.

8. An apparatus according to one of the claims 1 to 7, **characterized in that** the sleeve (11; 11a, 11b) and/or the calibrating plates (14, 15, 16) are held movable in a limited manner in one direction transversally to the axial direction of the profile (17).

9. An apparatus according to one of the claims 1 to 8, **characterized in that** the profile (17) is completely enclosed by the sleeve (11; 11a, 11b).

10. An apparatus according to one of the claims 1 to 9, **characterized in that** in the trough (5) there are provided a first connection (8a) for sucking in cooling water and a second connection (10a) for sucking in air and cooling water, with a regenerative water pump being connected to the second connection (10a) which in addition to the circulation of the cooling water also produces the required vacuum in the trough.

11. An apparatus according to one of the claims 1 to 10, **characterized in that** several dry calibrating devices (2) are provided upstream of the trough (5).

12. An apparatus according to one of the claims 1 to 11, **characterized in that** the trough (5) equipped with at least one sleeve (11; 11a, 11b) is provided downstream with a further trough with calibrating plates in which there is a lower negative pressure than in the first trough (5).

13. An apparatus according to one of the claims 1 to 12, **characterized in that** the trough (5) is directly flanged onto the downstream face area of the dry calibrating device (2), so that the same is directly in contact with the cooling medium.

## Revendications

1. Dispositif pour refroidir et calibrer des profilés extrudés en matière plastique, comprenant une cuve (5) située en aval d'un dispositif de calibrage à sec (2) et contenant un bain d'eau à travers lequel passe le profilé (17), des écrans (14, 15, 16) étant disposés entre les parois frontales (6, 6a ; 7) pour calibrer le profilé par l'effet d'une dépression,
**caractérisé en ce que**
dans une partie de la cuve (5) il est prévu une douille (11 ; 11a, 11b) enveloppant le profilé, qui guide au moins une zone du corps principal du profilé (17) et qui est maintenue par plusieurs écrans (12, 13 ; 12a, 12b, 13a, 13b) qui ont des ouvertures au niveau de la douille (11 ; 11a, 11b) pour le passage d'un courant d'agent réfrigérant et un intervalle entre le profilé (17) et la douille (11 ; 11a, 11b) communique des deux côtés avec le bain d'eau.

2. Dispositif selon la revendication 1,
**caractérisé en ce que**
la douille est à une certaine distance des parois frontales (6, 6a ; 7) dans la direction longitudinale.

3. Dispositif selon l'une quelconque des revendications 1 ou 2,
**caractérisé en ce que**
la longueur (1) de la douille (11 ; 11a, 11b) est comprise entre 100 et 400 mm, de préférence entre 250 et 320 mm et cette douille présente de préférence une épaisseur de paroi comprise entre 5 et 10 mm.

4. Dispositif selon l'une quelconque des revendications 1 à 3,
**caractérisé en ce qu'**
il est prévu un guidage, en particulier dans les zones de liaison de barrettes internes au contour externe du profilé (17).

5. Dispositif selon l'une quelconque des revendications 1 à 4,
**caractérisé en ce que**
la douille (11 ; 11a, 11b) se trouve dans la zone de la cuve (5) située en amont par rapport au courant.

6. Dispositif selon l'une quelconque des revendications 1 à 5,
**caractérisé en ce que**
plusieurs douilles (11a, 11b) se suivent dans la cuve (5).

7. Dispositif selon l'une des revendications 1 à 6,
**caractérisé en ce qu'**
à une extrémité de la cuve (5) il y a une ouverture d'alimentation (8) pour un agent réfrigérant et à l'autre extrémité de la cuve (5) il y a une ouverture d'évacuation (9) de l'agent réfrigérant de façon que la cuve (5) soit principalement traversée en direction longitudinale par un agent réfrigérant.

8. Dispositif selon l'une des revendications 1 à 7,
**caractérisé en ce que**
la douille (11 ; 11a, 11b) et/ou les écrans de calibrage (14, 15, 16) présentent une mobilité limitée perpendiculairement à la direction axiale du profilé (17).

9. Dispositif selon l'une des revendications 1 à 8,
**caractérisé en ce que**
le profilé (17) est entièrement entouré par la douille (11 ; 11a, 11b).

10. Dispositif selon l'une quelconque des revendications 1 à 9,
**caractérisé en ce qu'**
il est prévu dans la cuve (5) un premier raccord (8a) servant à aspirer de l'eau de refroidissement et un second raccord (10a) servant à évacuer de l'air et de l'eau de refroidissement, et à ce second raccord (10a) est raccordée une pompe d'eau autoamorçante, qui, en plus de la circulation de l'eau de refroidissement, assure le vide nécessaire dans la cuve.

11. Dispositif selon l'une quelconque des revendications 1 à 10,
**caractérisé en ce qu'**
il est prévu plusieurs dispositifs de calibrage à sec (2), en amont de la cuve (5).

12. Dispositif selon l'une quelconque des revendications 1 à 11,
**caractérisé en ce qu'**
en aval de la cuve (5) équipée d'au moins une douille (11 ; 11a, 11b) est montée une autre cuve équipée d'écrans de calibrage, dans laquelle règne une dépression plus faible que celle régnant dans la première cuve (5).

13. Dispositif selon l'une quelconque des revendications 1 à 12,
**caractérisé en ce que**
la cuve (5) est bridée directement sur la face frontale aval du dispositif de calibrage à sec (2), de sorte que celui-ci est en contact direct avec l'agent réfrigérant.
